# EUROPEAN PATENT APPLICATION

(11) **EP 0 778 077 A2**
(43) Date of publication of application: **11.06.1997**
(21) Application number: 96600009.3
(22) Date of filing: 05.12.1996
(51) Int. Cl.: B01D 71/64, B01D 71/68, C08L 79/08, C08L 81/06, C08J 3/09

(54) **New polymer membranes prepared from polysulfone and polyimide blends for the separation of industrial gas mixtures**

(30) Priority: 07.12.1995 GR 95010436
(71) Applicant: Sakellaropoulos, George, 55131 Kalamaria, Thessaloniki (GR)
(72) Inventor: Sakellaropoulos, G. P., 54006 Thessaloniki, Greece (GR); Kaldis, S. P., 54006 Thessaloniki (GR); Kapantaidakis, G. C., 54006 Thessaloniki, Greece (GR); Dabou, X. S., Thessaloniki (GR)

(57) **Abstract**

Preparation, testing and examination of gas separation polymer membranes prepared from mixtures of the polysulfone Udel P-1700 and the aromatic polyimide Matrimid 5218.

Polysulfone and polyimide proved to be completely miscible polymers as confirmed from optical microscopy, glass transition temperatures and spectroscopy analyses of the prepared mixtures. The complete miscibility permits the preparation of symmetric and asymmetric blend membranes in any proportion (1-99% wt) of polysulfone and polyimide.

Permeability measurements for various gases of industrial importance (such as carbon dioxide and monoxide, hydrogen, oxygen, nitrogen etc.) through polysulfone-polyimide blend membranes showed significant permeability improvements, compared to pure polyimides, with a minor change in their selectivity. Blend membranes were considerably more resistant to the plasticization phenomenon compared with those of pure polyimides.

Therefore, the use of polysulfone-polyimide polymer blends for the preparation of gas separation membranes offers a new, economic, high performance technical solution for application in the separation of industrial gases, with the typical compositions of gaseous mixtures encountered in the recovery of hydrogen from refinery gases, the separation of hydrogen from ammonia synthesis purge gases, the separation of gaseous products in coal, lignite and other solid fuel gasification processes, the separation of carbon dioxide from the exhaust gases of power generating stations using solid, liquid, gas or biomass as fuels, air separation for the production of nitrogen and/or oxygen enriched streams etc.

## Description

### Technical field of invention

The present invention refers to blends of two glassy, completely miscible polymers which comprise of an aromatic polysulfone and an aromatic polyimide. These blends can be used for the preparation of dense and asymmetric gas separation membranes. These membranes can be applied in industrial scale gas separations: i.e., hydrogen recovery from refinery gases, hydrogen separation from ammonia synthesis gases, separation of gaseous products in coal lignite and other solid fuel gasification plants, carbon dioxide separation from exhaust gases of solid, liquid, gas or biomass-fired power plants, carbon dioxide separation from natural gas, air separation for the production of nitrogen or oxygen enriched streams etc. These membranes exhibit certain advantages, the most important of which are :
- Mechanical strength
- Resistance to high temperatures and chemical attack.
- High permeabilities and selectivities for various gases.
- Resistance to plasticization at high pressures.
- Easy preparation.
- Reduced cost.

### Background of the invention

For many years polysulfones have been the traditional polymer materials used for the preparation of membranes used in liquid treatment processes (W.J. Koros and G.K Flemming, "Membrane-based gas separation", J. of Membrane Sci., 83, 1-80, 1993). In the late 1970s, Monsanto Co. introduced the use of asymmetric composite polysulfone-silicon rubber membranes for the separation of industrial gases (E. Perry, "Process for the recovery of hydrogen from ammonia purge gases", U.S. Patent 4,172,885 (1978), H.R. Null, "Method for separating gases", U.S. Patent 4,264,338 (1979)). Polysulfones exhibit satisfactory permeabilities and selectivities for various gases and they can be used in cases where the gases can cause plasticization. These properties combined with its relative low cost (about $15/kg Udel P-1700) have established polysulfones as one of the most widely used materials for the preparation of polymer membranes (A.J. Erb and D.R. Paul, "Gas sorption and transport in Polysulfone", J. of Membrane Sci, 8, 11, 1981).

The need for the preparation of more temperature and chemical resistant polymers led to the development of advanced materials, such as various types of polyimides. Gas separation membranes prepared from polyimides exhibit improved permeability and permselectivity properties, excellent mechanical properties and significant resistance to high temperature and chemical attack. Polyimide membranes are widely used industrially mainly for hydrogen recovery in refinery and ammonia synthesis plants (O.M. Ekiner and R.A. Hayes, "Production of aromatic polyimide membranes", U.S. Patent 4,983,191, assigned to Du Pont, (1989)).

Despite these remarkable properties, polyimide membranes have a serious disadvantage. Utilization with highly sorbing gases, such as CO₂, at pressures higher than a certain critical partial pressure results in irreversible membrane plasticization or swelling. The value of this critical partial pressure of plasticization is relatively low for polyimide and varies from 10 to 20 bar, while the respective value for polysulfone exceeds 55 bar (W.J. Koros and D.R.B. Walker, "Gas separation membrane material selection criteria: weakly and strongly interacting feed component situations", Polymer J, 23, 481, 1991, E.S. Sanders, S.M. Jordan and R. Sabramanian, "Penetrant-plasticized permeation in polymethylmethacrylate", J. of Memb. Sci. 74, 29, 1992). It should be noted that polymer plasticization causes deterioration of the membrane mechanical properties, and reduces significantly its selectivity values. Hence, it is not strange that polyimides find little application in the separation of CO₂ from light hydrocarbons in the petroleum and natural gas industry. Furthermore, the high value of polyimides (about $320/ kg Matrimid 5218) puts additional restrictions to their wide use in the preparation of gas separation polymer membranes.

The above mentioned complementary and contradictory properties of polysulfone and polyimide can be balanced by using a blending technique. Generally, by this method the prepararation of new materials with low cost and improved physicochemical properties is pursued (L.A. Utracki, "Encyclopaedic Dictionary of Commercial Blends", ChemTec Publishing, Toronto, 1994). Polymer blends are classified as miscible or immiscible. Due to thermodynamic restrictions, few polymer materials are completely miscible. For this reason, the discovery of miscible polymers is usually achieved empirically and requires experimental testing and verification (D.J. Walsh and S. Roston, "The miscibility of high polymers: The role of specific interactions", Adv. PoL Sci, 70, 119, 1985). It is noted that membranes prepared especially from immiscible polymers exhibit low selectivity and are of limited practical interest.

Blending of some polyethersulfone and polyimide type polymers has been reported in the international literature. Yamada, Katsuya and Okita Koichi in U.S. Patent 5,034,027, refer to gas separation membranes prepared from blending of the following polymers: (a) polyetherimide of General Electric Co, with commercial name ULTEM-1000, (b) aromatic polyesters of Unitika Co, Ltd, with commercial name Polymer U-100, (c) polycarbonates of Mitsubishi Gas Chemical Co., Ltd, and (d) polysulfones with commercial name Udel P-1700. The polyetherimide ULTEM-1000, is the basic component of these blends; the chemical structure of its recurring unit is given below:

ULTEM-1000 General Electric Co. 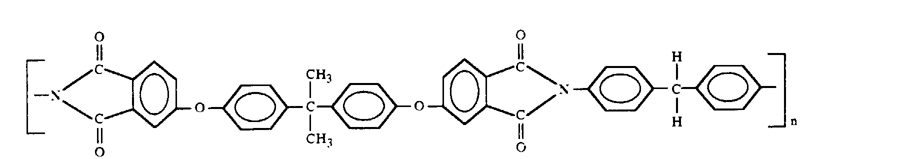 In another work of K. Liang, J. Grebowicz, E. Valles, F.E. Karasz and W.J. MacKnight entitled "Thermal and rheological properties of miscible polyethersulfone/polyimide blends", Journal of Polymer Science: Part B: Polymer Physics, 30, 465, (1992), the thermal and rheological properties of a completely miscible blend of a polyethersulfone, with commercial name VICTREX, and a polyimide with commercial name MATRIMID 5218 are presented. The chemical structure of these polymers are is following:

VICTREX, ICI America Co.

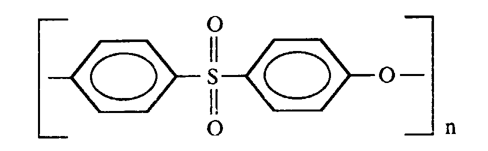

MATRIMID 5218, Ciba-Geigy 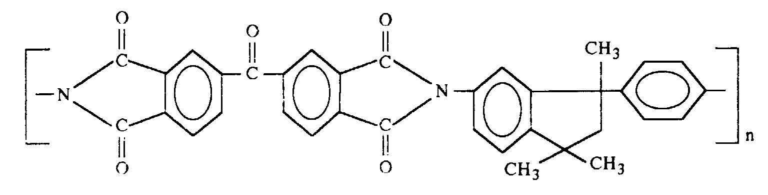 The miscibility of these polymers (polyethersulfone VICTREX and polyimide MATRIMID 5218) is also reported in the U.S. Patent 5,286,812 (F.E. Karasz Kατ W.J. MacKnight 1994). In the same patent, however, certain pairs of polymers containing polyethersulfone (VITREX), polysulfone (UDEL), polyetherimide (ULTEM 1000) and polyimide (XU-218, PI-2080), {ie VICTREX/ULTEM-1000, UDEL/ULTEM-1000, UDEL/XU-218 (MATRIMID 5218) and UDEL/PI-2080} are reporrted as immiscible. The miscibility or not of these polymer materials was examined by Differential Scanning Calorimetry (DSC) and analysis of viscoelastic properties. Contrary to the case of the completely miscible polyethersulfone VICTREX and polyimide XU-218 (equivalent to MATRIMID 5218) no evidence or proof is given for the miscibility or the immiscibility of the other pairs of these materials. It is, hence, apparent that the miscibility or immiscibility of polymers of similar (but not indentical) structrure cannot be predicted a priori, without testing

Lack of presentation of detailed experimental evidence and verification on claimed miscible polymers of interest is observed in EP 0 648 812 (Ekiner, Okan Max 1994). In addition, in this document the miscibility of various polysulfone/polyethersulfone - polyimide blends is claimed, without disclosing the nature of the solute used for blends preparation. However, blend compatibility depends not only on the recurring structural units and their substituents but also on the solutes and the temperatures which have been used for mixture preparation. It is important to note that certain polysulfone/polyimide blends, which are reported as miscible in this patent (eg. polysulfone Udel P-1700 and polyimide XU-218), are reported as immiscible in US patent 5,286,812 when dimethylacetamide was used as solute. It should be also noted that polymer annealing may result in loss of compatibility, when miscibility is due to a metastable phase formation in the mixture, (K. Liang, J. Grebowicz, E. Valles, F.E. Karasz Kατ W.J. MacKnight "Thermal and rheological properties of miscible polyethersulfone/polyimide blends", Journal of Polymer Science: Part B: Polymer Physics, 30, 465, 1992). Probably these contradictions have culminated to the statement in this patent that the most preferable polyethersulfone-polyimide combination for gas separation membrane preparation is the pair of polymers with commercial names VICTREX and MATRIMID 5218 for which were presented the only examples. Although this blend of polymers is claimed to be completely miscible, it fails to acomplish one important blending target which is the reduction of production cost. The high cost of polyethersulfone VICTREX (about 185 $/kg), results in an insignificant reduction of the cost of the polysulfone - polyimide blend. Finally, differential scanning calorimetry was the only experimental method claimed to be used for the campatibility determination, without however, presentation of any experimental measurements or analyses.

### Summary

The present invention consists essentially of the preparation of aromatic polysulfone and aromatic polyimide blends in various proportions, the application of various experimental methods for miscibility examination, and the formation of gas separation symmetric and asymmetric membranes with improved physicochemical properties and significantly reduced production cost.

### Detailed description of the invention

The aromatic polysulfone which was used in blend preparation has a recurring unit with the following chemical structure:

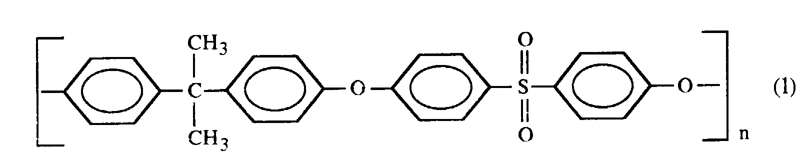

This polysulfone is available commercially by Amoco under the commercial name Udel P-1700.

The aromatic polyimide which was used in blend preparation has a recurring unit with the following chemical structure:

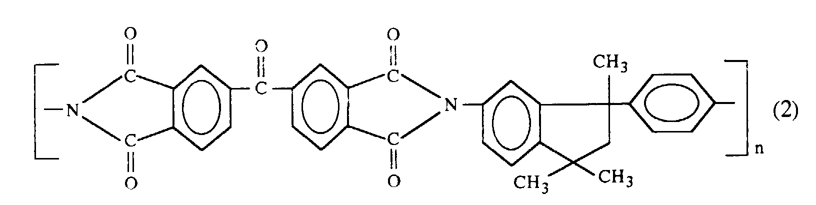

This polyimide is available commercially by Ciba-Geigy under the commercial name MATRIMID 5218. For simplicity, in the continuation of this application the polysulfone Udel P-1700 will be referred to as polysulfone and the polyimide MATRIMID 5218 as polyimide.

Polysulfone symmetric membranes were prepared by a casting method from a 2-8% wt solution in chloroform, while those of polyimides from a 2-8% wt solution in methylene chloride. Polymer blend membranes were prepared from a 3-6% wt solution in methylene chloride in three different polysulfone-polyimide weight proportions (1:4, 1:1, 4:1). In all cases, 10 ml of the solution were cast in petri dishes of 10 cm diameter resulting in films of about 50 µm thick. Solvent was evaporated from the films for 24 h at room temperature. Subsequently, the clear films were removed from the dishes by immersion in water and dried in an oven. The oven temperature was slowly raised from 25 to 190°C for polysulfone and blend membranes, and from 25 to 250°C for polyimide membranes in a time period of three days. At the end of the procedure, the temperature was held constant for 24 h at 190°C for polysulfone and blends, and at 250°C for polyimides. The membranes were cooled at 25°C over a period of several hours and stored in a desiccator. With the above method, symmetric homogeneous membranes of pure and blend polymers were prepared.

The need for better performance in the separation of gases led us also to the preparation of asymmetric membranes. Asymmetric membranes consist of a porous substrate (about 150 µm thick) and the surface non-porous section (0.1-1 µm thick) and are characterized by high permeate fluxes.

Asymmetric membranes were prepared by the dry/wet phase inversion processes from a solution consisting of 5-15% wt polymer (polysulfones, polyimides or their blends) in a mixture of methylene chloride, 1,1,2, trichloroethane and 2, methyl-2-boutanol. Polymer solutions were cast onto glass plates and they were either dried at room temperature for 48 h and then in an oven at 100°C for 5 days, or after partial evaporation they were quenched with methanol and dried at room temperature.

The miscibility of the polysulfone-polyimide blends, prepared in the form of dense and asymmetric membranes, was examined by using four different experimental methods:
1. Optical Microscopy
2. Differential Scanning Calorimetry
3. Fourier Transform Infra Red Spectroscopy
4. Gas Permeability

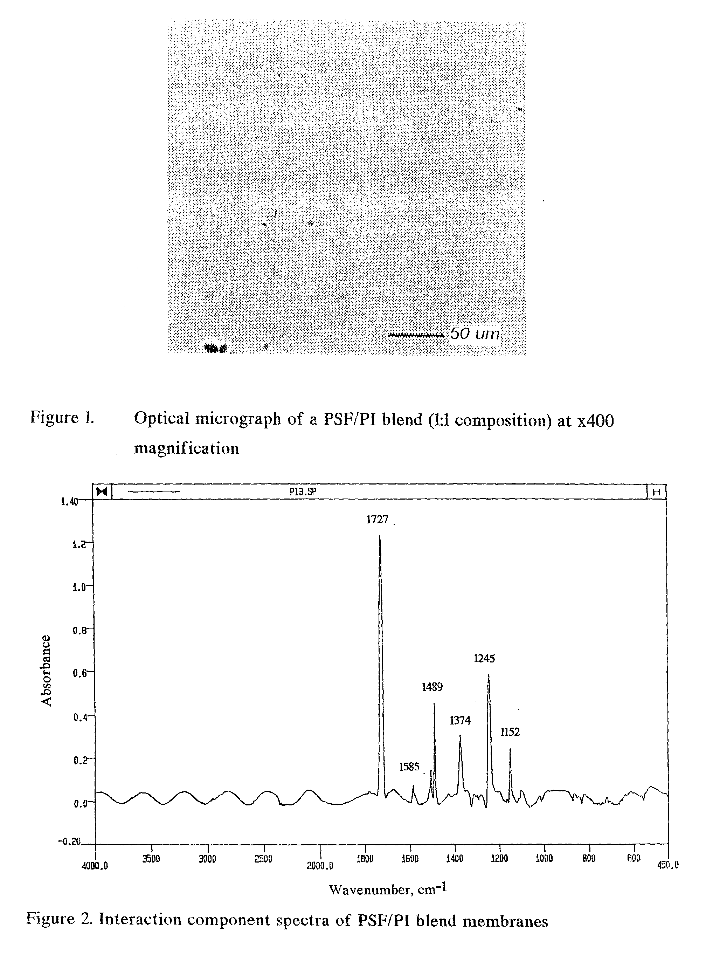

A preliminary indication for the miscibility is the optical clarity of the resulting mixture. In addition, phase contrast optical microscopy (Leitz) revealed the existence of a unique homogeneous phase (Figure 1), which indicates the compatibility of the two polymers. For all of the prepared polysulfone-polyimide mixtures, microscopic measurements showed perfect mixing of the two polymers.

The method of differential scanning calorimetry (DSC) was used to determine polymer glass transition temperature. Measurements were performed on a Shimadzu DSC-50Q calorimeter, in which membrane specimens of 5-10 mg were heated at a rate of 10°C/min. Further confirmation of the polymer miscibility was obtained by glass transition measurements. In Table 1, the measured glass transition temperatures, T_{g}, of polysulfone/polyimide blends and of pure polysulfone and polyimide are shown. The one single glass transition temperature of the mixtures combined with its linear dependence on the pure components further confirms the perfect miscibility of these polymers in any proportion.

**Table 1.**

| Glass transition temperatures for various polysulfone concentrations in polysulfone-polyimide blends. | |
|---|---|
| Polysulfone (% wt) | T_{g} (°C) |
| 100 | 185.8 |
| 80 | 203.4 |
| 50 | 242.6 |
| 20 | 296.2 |
| 0 | 330 |

Fourier transform infrared spectroscopy (FTIR) was used to study any specific interactions between the polymer components of the polysulfone/polyimide mixtures. Measurements were carried out in a Perkin Elmer 2000 spectrometer. The spectra of incompatible polymers are simply the sum of the spectrum of the pure polymer components, while in the case of miscible blends, like polysulfone-polyimide membranes, significant frequency shifts of the characteristics peaks of the pure polymers appear (Figure 2). Thus, the FTIR characterization results of the prepared polymer mixtures support further the miscible character of the polysulfone-polyimide blends.
Apart from physicochemical properties analysis, the miscibility of polysulfone-polyimide blends, was also examined by means of their permeabilities to various industrial gases. The examined gases were H₂, He, CO₂, O₂, N₂. The permeability coefficients were determined by the variable volume method, for pressures varying from 1 to 60 bar and temperatures from 20° to 80°C.

In Table 2, the permeability coefficients for pure polysulfone and polyimide and for their mixtures in various proportions are shown at 10 atm pressure and 40°C temperature. With the exception of CO₂, the coefficients of all gases vary monotonically relative to the pure components. In the case of CO₂, there is a strong interaction with the polyimide portion of the mixture. This effect of CO₂ and specifically the possibility of polymer plasticization, is of great importance for the avoidance of polymer structure damage.

**Table 2**

| Gas permeabilities (Qx10¹³, cm^{3.}cm/cm^{2.}s^{.}Pa) through polysulfone-polyimide membranes, at 10 bar pressure and 40°C temperature, for various polysulfone concentrations | | | | | | |
|---|---|---|---|---|---|---|
| Polysulfone concentration (%) | | 0 | 20 | 50 | 80 | 100 |
| Gas | He | 7.44 | 9.24 | 10.82 | 12.24 | 13.61 |
| | H₂ | 10.81 | 10.20 | 9.47 | 8.99 | 8.51 |
| | CO₂ | 3.64 | 2.95 | 2.57 | 3.24 | 4.62 |
| | O₂ | 0.73 | 0.79 | 0.87 | 0.93 | 1.04 |
| | N₂ | 0.15 | 0.18 | 0.16 | 0.20 | 0.24 |

Measurements showed that the extent of the plasticization phenomenon is proportional to the polyimide portion in the mixtures. The critical pressures of plasticization are shown in Table 3. From this table it is evident that the presence of polysulfone in relatively high concentrations (20-50%) results in a

**Table 3.**

| Critical pressure of plasticization for polysulfone-polyimide membranes | |
|---|---|
| Polysulfone/Polyimide (% wt) | Plasticization pressure (bar) |
| 100/0 | 15 |
| 80/20 | 18 |
| 50/50 | ∼30 |
| 20/80 | >35 |
| 0/100 | >50 |

significant increase in the critical pressure of plasticization, compared with that of the pure polyimide.
The compatibilty of the polysulfone-polyimide blends, combined with the gas separation performance of the respective membranes, establish these blends as a very attractive material for practical applications. Compared to pure polysulfone Udel P-1700, the blends of polysulfone Udel P-1700/polyimide MATRIMID 5218 exhibit better thermal stability, resistance to chemical attack and higher selectivity in the separation of gases due to the polyimide portion. Compared to pure polyimide, due to the presence of polysulfone, the blends are less sensitive to the plasticization phenomenon and quite less expensive, and they exhibit only slightly reduced permeability and selectivity efficiency for the examined gases. Therefore, the blends of polysulfone Udel P-1700-polyimide Matrimid 5218 can be viewed as a new, economical, high performance polymer material family suitable for the preparation of gas separation polymer membranes. The above distinct properties establish polysulfone-polyimide membranes as quite useful for the recovery of hydrogen from refinery gases, the separation of hydrogen from ammonia synthesis purge gases, the separation of gaseous products in coal lignite and/or other solid-fuel gasification processes, the separation of carbon dioxide from the exhaust gases of power generating stations fired by solid, liquid or gas fuels or by biomass fuels, the separation of air into nitrogen and/or oxygen enriched streams etc.

## Claims

1. A method which refers to the production of a new polymer blend material derived from the complete and perfect mixing of an aromatic polysulfone and an aromatic polyimide in methylene chloride (CH₂Cl₂) as solute The aromatic polysulfone has a recurring unit with the following chemical structure: 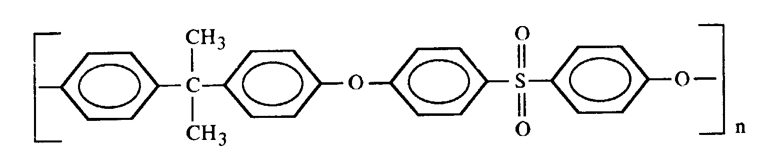 This polysulfone is available commercially by Amoco under the commercial name Udel P-1700. The aromatic polyimide has a recurring unit with the following chemical structure: 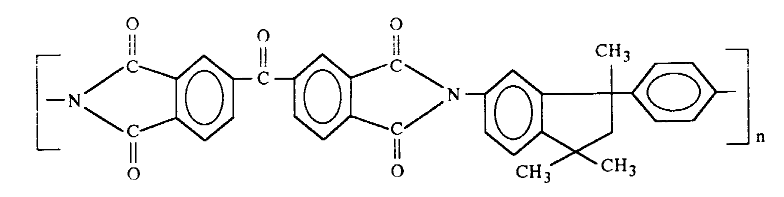 This polyimide is available commercially by Ciba-Geigy under the commercial name MATRIMID 5218.

2. A method for the preparation of symmetric membranes, which refers to miscible polysulfone-polyimide blends, with compositions from 1 to 99% wt, according to claim 1.

3. A method for the preparation of asymmetric membranes, by the dry/wet phase inversion process, which refers to miscible polysulfone-polyimide blends, according to claim 1.

4. Symmetric membranes, of claims 1 and 2, which refer to miscible polysulfone-polyimide blends.

5. Asymmetric membranes, of claims 1 and 3, which refer to miscible polysulfone-polyimide blends.

6. Use of symmetric and asymmetric membranes from polysulfone-polyimide blends, according to claims 1 to 5, for the separation of gaseous mixtures at pressures up to 60 bar, and resistance to plasticizing gases (carbon dioxide, hydrogen sulfide etc.) at pressures up to 35 bar and temperatures up to 100°C.

7. Use of blend asymmetric membranes from polysulfone-polyimide mixtures, according to claims 1 to 6, for the separation of industrial gases, with the typical compositions of gaseous mixtures encountered in the recovery of hydrogen from refinery gases, separation of hydrogen from ammonia synthesis purge gases, separation of gaseous products in coal lignite and other solid fuel gasification processes, separation of carbon dioxide from the exhaust gases of power generating stations using solid, liquid, gas or biomass as fuels, air separation for the production of nitrogen and/or oxygen enriched streams, etc.

8. Use of blend asymmetric membranes from polysulfone-polyimide mixtures, according to claims 1-7, for the separation of gases, which contribute to the greenhouse effect (such as CO₂), from industrial exhaust gases.

9. Application according to claim 1, which refers to the production of new advanced plastic materials, for the preparation of liquid and gas fluid separation membranes, food packaging membranes, safety clothing fibers, insulating adhesive tapes, insulating electric cables, plastic parts of electric and/or electronic home apparatuses and plastic vehicle parts.
